# EUROPÄISCHE PATENTANMELDUNG

(11) **EP 1 014 049 A2**
(43) Veröffentlichungstag der Anmeldung: **28.06.2000**
(21) Anmeldenummer: 99125276.8
(22) Anmeldetag: 18.12.1999
(51) Int. Cl.: G01F 23/296

(54) **Vorrichtung zur Kontrolle des Füllstandes**

(30) Priorität: 21.12.1998 DE 29822636 U; 18.09.1999 DE 19944814
(71) Anmelder: Horst, Michael, Dipl.-Ing., 34128 Kassel (DE)
(72) Erfinder: Horst, Michael, Dipl.-Ing., 34128 Kassel (DE)
(74) Vertreter: Freiherr von Schorlemer, Reinfried, Dipl.-Phys.

(57) **Zusammenfassung**

Es wird eine Vorrichtung zur Kontrolle des Füllstands in einem Behälter (2) beschrieben. Die Vorrichtung weist Mittel (8) zur berührungslosen Anregung einer Wand des Behälters (2) zu einer gedämpften, mechanischen Schwingung und wenigstens einen Sensor (9) zur berührungslosen Ermittlung wenigstens eines Parameters der Schwingung zwecks Beurteilung des Füllstands auf. Der Füllstand wird anhand wenigstens eines Parameters beurteilt, der aus den ersten Schwingungsperioden ab Beginn der Schwingung abgeleitet ist.

## Beschreibung

Die Erfindung betrifft eine Vorrichtung der im Oberbegriff des Anspruchs 1 definierten Gattung.

Die Kontrolle der Füllstände von Behältern muß häufig sehr schnell erfolgen. Beispielsweise werden Behälter, die in der Getränke- und Lebensmittelindustrie verwendet werden, insbesondere Flaschen, Dosen od. dgl. mit Hilfe von Transportbändern in schneller Folge an verschiedenen Inspektionsstationen vorbeigeführt, die u.a. der Füllstandskontrolle dienen, wobei die Transportgeschwindigkeit vorzugsweise 60.000 Behälter pro Stunde und mehr beträgt. Da in derartigen Fällen nur eine berührungslose Füllstandskontrolle möglich ist, werden für diesen Zweck vor allem Vorrichtungen und Verfahren angewendet, die mit radioaktiven Gammastrahlen, Röntgenstrahlen, hochfrequenten elektromagnetischen Wellen (DE 26 48 076 B2) oder kapazitiven Mitteln (DE 30 01 133 A1) arbeiten. Dabei sind die beiden zuletzt genannten Verfahren nur anwendbar, wenn es sich um Behälter aus elektrisch nicht leitenden Materialien, insbesondere aus Nichtmetallen handelt. Dagegen sind Vorrichtungen und Verfahren, die mit Gammastrahlen arbeiten und daher auch zur Füllstandskontrolle in Metallbehältern geeignet sind, schon allein deshalb allgemein unerwünscht, weil die Anwendung von radioaktiven Strahlungsquellen aus Umweltschutzgründen mit einer Vielzahl von Nachteilen verbunden ist, selbst wenn die benötigten Gammastrahlen mit vergleichsweise niedrigen Strahlendosisleistungen arbeiten. Das gleiche gilt für Röntgenmessungen, da hier ebenfalls besondere Schutzmaßnahmen zu berücksichtigen sind.

Es ist daher auch bereits vorgeschlagen worden (DE 296 03 363 U1 desselben Anmelders), die Füllstandshöhe vor allem von Metallbehältern dadurch zu messen, daß die Behälterwand einer definierten Temperaturbehandlung unterworfen und der Füllstand durch Auswertung von Signalen bestimmt wird, die für wenigstens zwei, von unterschiedlichen Behälterhöhen ausgehende Wärmestrahlungen repräsentativ sind.

Daneben sind Vorrichtungen der eingangs bezeichneten Gattung zur Kontrolle des Füllstands einer verschlossenen Flasche bekannt, bei denen die angeregte Behälterwand ein zum Verschließen der Flasche verwendeter Kronenkorken ist. Als Parameter der Schwingung wird die Frequenz benutzt, wobei zwischen einer primären Schwingung des Kronenkorkens selbst und einer sekundären, stehenden Schwingung in dem Raum zwischen dem Kronenkorken und dem Füllgut der Flasche unterschieden wird. Die Frequenzen werden durch die Untersuchung von Schwingungsperioden in Meßfenstern ermittelt, die vergleichsweise große, z.B. 0,3 ms bis 4,8 ms betragende zeitliche Abstände vom Beginn der Schwingung haben. Die Auswertung der Schwingungen ist daher kompliziert und erfordert einen hohen apparativen Aufwand. Außerdem ist die Auswertung empfindlich im Hinblick auf äußere Störungen und nur mit Hilfe von Fourier-Analysen exakt durchführbar. Schließlich ist für jeden Kontrollvorgang ein vergleichsweise großes Zeitintervall erforderlich, weshalb die Behälterkontrolle nur mit einer vergleichsweise geringen Geschwindigkeit vorgenommen werden kann.

Demgegenüber liegt der Erfindung die Aufgabe zugrunde, die Vorrichtung der eingangs bezeichneten Gattung so zu gestalten, daß sie mit einfachen apparativen Mitteln realisiert werden kann und weitgehend unempfindlich gegen äußere Störungen ist.

Zur Lösung dieser Aufgabe dienen die kennzeichnenden Merkmale des Anspruchs 1.

Weitere vorteilhafte Merkmale der Erfindung ergeben sich aus den Unteransprüchen.

Die Erfindung beruht auf der Erkenntnis, daß eine Behälterwand in Abhängigkeit vom Füllstand unterschiedlich schnell und unterschiedlich weit ausgelenkt wird. Die Behälterwand ist offenbar mit einem Masse/Feder-System zu vergleichen, in dem außer den Federeigenschaften der Behälterwand auch die variable, vom Füllgut beeinflußte Masse bedeutsam ist, wenn das Füllgut z.B. eine Flüssigkeit wie Bier, Öl od. dgl. oder ein Lebensmittel wie Gemüse oder Obst ist. Dabei hat sich überraschend gezeigt, daß alle für die Ermittlung bzw. Kontrolle des Füllstands geeigneten Größen bereits aus der ersten Schwingungsperiode abgeleitet werden können, was einen einfachen Aufbau der Vorrichtung und eine Behälterkontrolle mit hoher Geschwindigkeit ermöglicht. Überraschend ist ferner, daß die erfindungsgemäße Vorrichtung weitgehend unempfindlich gegen äußere Bedingungen, insbesondere den in einer Fabrikhalle od. dgl. herrschenden Lärm ist.

Die Erfindung wird nachfolgend in Verbindung mit den beiliegenden Zeichnungen an einem Ausführungsbeispiel näher erläutert. Es zeigen:
Fig. 1 eine grob schematische Darstellung der erfindungsgemäßen Vorrichtung zur Kontrolle des Füllstands in einem Behälter;
Fig. 2 eine teilweise geschnittene Darstellung eines in der Vorrichtung nach Fig. 1 verwendeten Mittels zur Anregung einer Schwingung sowie eines Sensors zur Messung dieser Schwingung; und
Fig. 3 schematisch verschiedene Meßkurven, die mit der Vorrichtung nach Fig. 1 und 2 erhalten wurden.

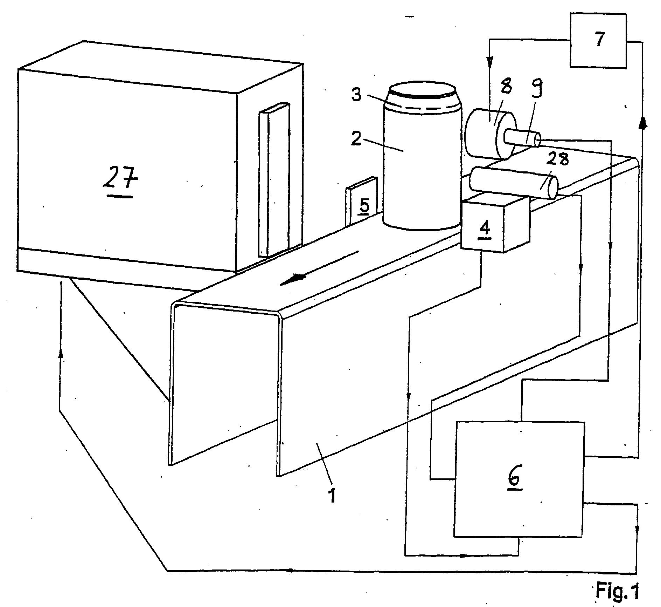

Die Vorrichtung nach Fig. 1 enthält eine nur schematisch dargestellte Fördereinrichtung 1 in Form eines Transportbandes, das z.B. in Richtung eines eingezeichneten Pfeiles bewegt wird und einen sogenannten Geradförderer innerhalb einer Anlage zum Füllen von Dosen bildet. Derartige Anlagen sind in der Getränke- und Lebensmittelindustrie allgemein bekannt und brauchen daher nicht näher erläutert werden.

Fig. 1 zeigt weiter einen Behälter 2 in Form einer Dose, die gerade eine Füllstation für ein Getränk, z.B. Bier, oder ein anderes Füllgut, z.B. Gemüse, durchlaufen hat und in dieser Füllstation bis zu einem gestrichelt angedeuteten Soll-Füllstand 3 gefüllt wurde. Im Ausführungsbeispiel ist ferner angenommen, daß der Behälter 2 z.B. eine aus Stahlblech, Aluminium od. dgl. hergestellte Metalldose ist. Die zu lösende Aufgabe besteht darin, den Behälter berührungslos darauf zu überprüfen, ob der erwartete Soll-Füllstand 3 erreicht oder unter- bzw. überschritten worden ist.

Die Durchführung eines Kontrollvorgangs wird mit einer Reflexlichtschranke getriggert, deren quer über die Fördereinrichtung 1 erstreckter Lichtstrahl, der von einer Lichtsende- und -empfangseinheit 4 ausgeht und von einem Spiegel 5, insbesondere einem Tripelspiegel reflektiert wird, von jedem durchlaufenden Behälter 2 unterbrochen wird. Die Reflexlichtschranke 4,5 gibt ein Triggersignal an eine zentrale Steuereinheit 6 und signalisiert dadurch die Anwesenkeit eines Behälters 2 an einem vorgewählten Meßort. Die zentrale Steuereinheit 6 leitet den Kontrollvorgang ein, indem sie einem Impulsgenerator 7 ein Startsignal zuführt, der seinerseits ein Mittel 8 zur berührungslosen mechanischen Auslenkung einer Wand, vorzugsweise einer Seitenwand bzw. eines vorgewählten Abschnitts einer zylindrischen Behälterwand des am Meßort befindlichen Behälters 2 ansteuert, um dadurch die Behälterwand zu einer gedämpften mechanischen Schwingung anzuregen. Im Ausführungsbeispiel besteht das Mittel 8 aus einem Elektromagneten, der z.B. in einem Abstand von 3 mm von der Wand des am Meßort vorbeilaufenden Behälters 2 und so angeordnet ist, daß das von ihm erzeugte Magnetfeld im wesentlichen senkrecht auf die Behälterwand trifft. Der Elektromagnet wird z.B. mit einem ca. 80 µs dauernden Spannungsimpuls beaufschlagt. Eine Folge davon ist, daß die Behälterwand je nachdem, ob es sich z.B. um eine Dose aus Stahlblech oder Aluminium handelt, durch das vom Elektromagneten erzeugte Magnetfeld angezogen bzw. abgestoßen wird. Dabei ist zu berücksichtigen, daß ein Elektromagnet ferromagnetisches Stahlblech anzieht, nicht ferromagnetisches Aluminium dagegen aufgrund der in diesem erzeugten Wirbelfelder, die zu sich gegenüberliegenden gleichnamigen Polen führen, abstößt. Mit anderen Worten bewirkt die vom Elektromagneten ausgehende, magnetische Kraft eine Auslenkung von innen nach außen, wenn es sich um eine Stahlblechdose handelt, bzw. eine Auslenkung von außen nach innen, wenn es sich um eine Aluminiumdose handelt. Aufgrund dieser ersten Auslenkung durch den Elektromagneten oder irgendein anderes Mittel 8 beginnt die angeregte Behälterwand somit eine ungedämpfte Schwingung, die auch nach dem Ausschalten des Mittels 8 noch eine Zeitlang erhalten bleibt.

Bei den Meinen auftretenden Auslenkungen kann angenommen werden, daß sich die Behälterwand elastisch wie eine Feder verhält. Befindet sich hinter der Behälterwand ein Füllgut, z.B. ein Getränk, so muß dieses zusätzlich beschleunigt werden, d.h. das Füllgut stellt eine zusätzliche Masse dar, die die Eigenschaften bzw. Parameter der gedämpften Schwingung wesentlich beeinflußt.

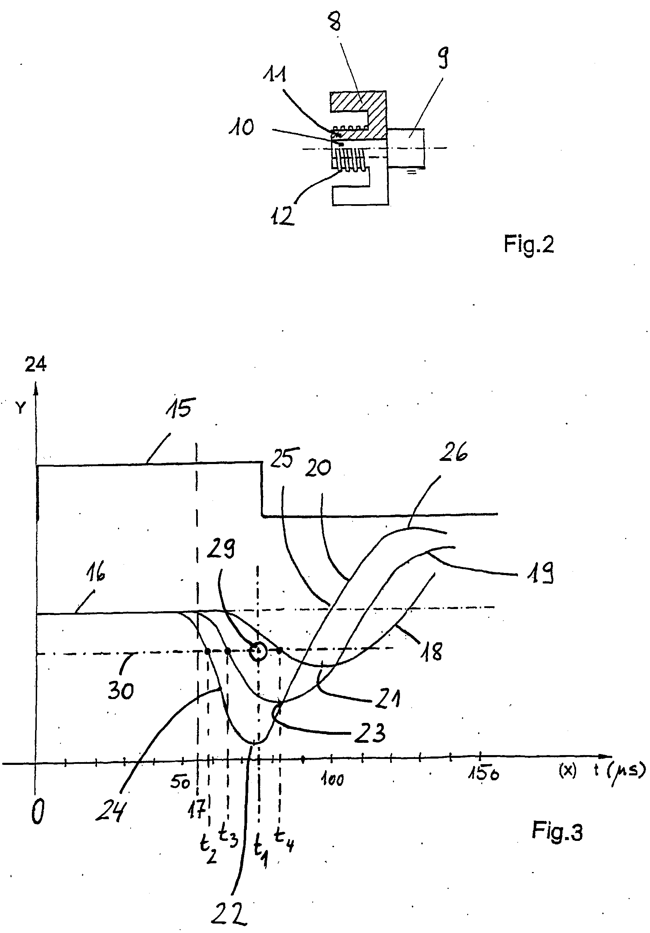

Die Auslenkung bzw. Schwingung der Behälterwand wird berührungslos mit einem Sensor 9, z.B. einem die entstehenden Luft- bzw. Schalldruckänderungen messenden Mikrofon aufgenommen und aufgezeichnet. Alternativ könnte ein Lasersystem, insbesondere ein sogenanntes Laservibrometer, verwendet werden, was jedoch wesentlich höhere Kosten verursachen würde. Im Ausführungsbeispiel (Fig. 2) ist der Elektromagnet 8 nach Art eines Topfmagneten ausgebildet und mit einem zentralen, eine axiale Bohrung 10 aufweisenden Ferritkern 11 versehen, auf den eine Wicklung 12 aufgewickelt ist. Die Bohrung 10 hat einen Durchmesser von ca. 2 mm. Die Wicklung 12 hat z.B. 22 Windungen und wird beim Vorbeigang eines jeden Behälters 2 für eine Dauer von ca. 80 µs von einem Strom mit einer Stärke von 200 A durchflossen. Das Mikrofon ist z.B. ein Kondensatormikrofon, das eine Schallöffnung mit einem Durchmesser von ca. 2 mm besitzt, die direkt hinter der Bohrung 10 angeordnet wird, wie z.B. in Fig. 2 angedeutet ist. Die vom Sensor 9 abgegebenen Signale werden der Steuereinheit 6 zugeführt.

Fig. 3 zeigt schematisch das Verhalten einer Behälterwand bzw. das vom Sensor 9 (Mikrofon) abgegebene Signal für den Fall einer Getränkedose aus Stahlblech. Längs der X-Achse ist dabei die Zeit in µs aufgetragen, während längs der Y-Achse im unteren Bereich die Auslenkung der Behälterwand in willkürlichen Einheiten und im oberen Bereich die an das Mittel 8 (Elektromagnet) angelegte Spannung ebenfalls in willkürlichen Einheiten aufgetragen ist.

Eine Kurve 15 in Fig. 3 zeigt, daß zu einem Zeitpunkt t = 0 eine Spannung nach Art eines Rechteckimpulses an das Mittel 8 angelegt wird, die für ca. 80 µs anhält. Dagegen zeigt ein der Null-Auslenkung entsprechender Kurvenabschnitt 16 in Fig. 3, daß die Behälterwand aufgrund des verzögerten Aufbaus des magnetischen Feldes im Elektromagneten des Mittels 8 erst zu einem Zeitpunkt t = 17, der ca. 55 µs nach dem Zeitpunkt t = 0 bzw. nach dem Beginn der Aktivierung des Mittels 8 liegt, allmählich ausgelenkt wird, was weitgehend unabhängig vom Füllstand des im Behälter 2 befindlichen Füllgutes ist. Von diesem Zeitpunkt t = 17 an ist der Verlauf der vom Mittel 8 angeregten Schwingung allerdings stark vom Füllstand und geringfügig auch vom Füllgut abhängig, wie Kurvenabschnitte 18, 19 und 20 zeigen.

Der Kurvenabschnitt 18 in Fig. 3 zeigt das Schwingungsverhalten der Behälterwand eines vollen Behälters 2. Aufgrund der großen zu beschleunigenden Masse hinter der Behälterwand wird deren maximale Auslenkung (Tiefpunkt 21) etwa zu einem Zeitpunkt t = 95 µs erreicht, wohingegen die Behälterwand eines leeren Behälters 2 gemäß dem Kurvenabschnitt 20 bereits etwa zum Zeitpunkt t = 75 µs (Tiefpunkt 22) voll ausgelenkt ist. Für einen teilweise gefüllten Behälter 2 wurde gemäß dem Kurvenabschnitt 19 etwa ein Zeitpunkt t = 82 µs bis zum Erreichen der vollen Auslenkung (Tiefpunkt 23) ermittelt. Außerdem zeigen die Kurvenabschnitte 16 bis 20, daß die Amplitude der Auslenkung mit größer werdendem Füllstand des Behälters 2 abnimmt.

Auffallend ist ferner, daß sich der Füllstand aus den Kurvenabschnitten 16 bis 20 anhand von Parametern beurteilen läßt, die sich aus der allerersten oder sogar ersten viertel oder halben Schwingungsperiode ab Beginn der gedämpften Schwingung ergeben. Insoweit stellt Fig. 3 nichts anderes als ein zeitlich ausreichend weit auseinander gezogenes Oszillogramm dar, das nur die erste Halbschwingung ab Beginn der Auslenkung zum Zeitpunkt t = 17 zeigt. Alternativ zu den Parametern Amplitude und Tiefpunkt könnten auch andere Parameter zur Beurteilung des Füllstands herangezogen werden, z.B. die zeitliche Lage von Wendepunkten (z.B. 24), Nulldurchgängen (z.B. 25) oder Hochpunkten (z.B. 26), deren Amplituden oder beliebige zweckmäßige Kombinationen davon. Analog könnten zur Kontrolle auch die zweiten oder dritten Schwingungsperioden ab Beginn der Schwingung zum Zeitpunkt t = 17 verwendet werden. Ein überraschender und für die Erfindung wesentlicher Vorteil besteht jedoch darin, daß die erforderlichen Parameter nicht nur aus den ersten Schwingungsperioden, sondern sogar aus der allerersten und insbesondere der ersten viertel oder halben Schwingungsperiode der Behälterwand abgeleitet werden können, d.h. in einem Zeitintervall, das ab Beginn der Anregung durch den Impulsgenerator 7 nur ca. 100 µs dauert. Dadurch könnten nach dem beschriebenen Verfahren ohne weiteres Behälter 2, insbesondere Dosen, auf ihren Füllstand untersucht werden, die mit einer Geschwindigkeit von 120.000 Dosen pro Stunde am Meßort vorbeitransportiert werden, wobei zwischen den einzelnen Anregungsphasen (Kurve 15 in Fig. 3) ausreichend lange Zeitabschnitte verbleiben, in denen kein Strom durch die Magnetwicklung 12 fließt, so daß diese trotz der hohen Ströme nicht überhitzen kann.

Eine besonders einfache Art der Auswertung ergibt sich, wenn die Messung der Größe der Auslenkung der Behälterwand zu einem vorgewählten Zeitpunkt ab Beginn der Anregung bzw. Aktivierung des Mittels 8 vorgenommen wird, wobei der Beginn der Anregung im Ausführungsbeispiel gleichbedeutend mit dem Einschalten der Strom- bzw. Spannungsversorgung für den Elektromagneten (Mittel 8) ist. In Fig. 3 ist dies z.B. für einen Zeitpunkt t₁ gezeigt, der z.B. ca. 75µs ab dem Zeitpunkt t=0 liegt. Zu diesem Zeitpunkt t₁ liegen die Auslenkungen für einen leeren und nicht vollgefüllten Behälter (Kurven 19 und 20) deutlich unterhalb und für einen vollen Behälter (Kurve 18) deutlich oberhalb eines Schwellwerts 29. Durch an Behältern mit unterschiedlichen Füllhöhen vorgenommene Testläufe kann eine günstige Lage für den zu wählenden Schwellwert 29 leicht herausgefunden werden. Daran anschließend zeigen zum Zeitpunkt t₁ alle in Fig. 3 oberhalb des Schwellwerts 29 liegende Auslenkungen einen vollen Behälter, alle unterhalb dieses Schwellwerts 29 liegende Auslenkungen dagegen einen leeren oder nicht ausreichend gefüllten Behälter an.

Eine ähnlich einfache Art der Auswertung ergibt sich, wenn überprüft wird, wie schnell die Wand ausgelenkt wird bzw. zu welchem Zeitpunkt, wiederum bezogen auf t=0, die Auslenkung der betrachteten Behälterwand, eine vorgewählte, durch eine Linie 30 angedeutete Auslenkung erreicht hat. Nach Fig. 3 entsprechen Zeitpunkte t₂ und t₃ daher der Erkennung eines leeren oder nicht ausreichend gefüllten Behälters, während zum Zeitpunkt t₄ ein voll gefüllter Behälter die Auslenkung gemäß Linie 30 erreicht. Auch hier kann durch Testläufe leicht ermittelt werden, ab welchem Zeitpunkt das Erreichen der Linie 30 einem vollen Behälter entspricht. Dabei könnte zusätzlich das Erreichen des dem Tiefpunkt 21 zugeordneten Zeitpunkts als Information dafür angesehen werden, bis zu welchem spätesten Zeitpunkt ein das Schneider der Linie 30 anzeigendes Signal gemessen worden sein muß.

Auch in den zuletzt genannten Fällen hat es sich als zweckmäßig erwiesen, wenn die Behälterwand durch das Mittel 8 zumindest in einem schmalen Bereich ausgelenkt wird, der im wesentlichen in Höhe der zu überprüfenden Sollfüllhöhe der Behälter liegt.

Die im Einzelfall gewünschte Auswertung der aus den Kurvenabschnitten 16 bis 20 abgeleiteten Parameter erfolgt zweckmäßig in der zentralen Steuereinheit 6. Der detaillierte Aufbau der Steuereinheit 6 bedarf für den Fachmann keiner näheren Erläuterung, da die Auswertung von Signalen nach Amplituden, Extremwerten, Wendepunkten, Nulldurchgängen, Schwellwerten od. dgl. zum Standardwissen des Fachmanns gehört. In besonders einfacher Weise können die Steuerung und Auswertung z.B. mit Hilfe einer Vorrichtung vorgenommen werden, die einen Mikrocomputer aufweist, dessen Programmierung ebenfalls zum Standardwissen des Fachmanns gehört.

Die Kontrolle der Behälter 2 kann auf unterschiedliche Weise erfolgen. Bei einer bevorzugten Ausführungsform ist die Mittelachse des Sensors 9 z.B. in Höhe eines vorgewählten Soll-Füllstands angeordnet. In diesem Fall könnte eine Kontrolle darauf vorgesehen werden, ob ein Behälter 2 bis zu einer Mindesthöhe gefüllt ist oder nicht. Es reicht dabei aus, den diesem Füllstand zugeordneten Kurvenabschnitt 16 bis 20 zu ermitteln und ein Fehlersignal zu erzeugen, wenn der verwendete Parameter ein Unterschreiten der Soll-Füllhöhe anzeigt. Alternativ könnte ein Fehlersignal aber auch immer dann erzeugt werden, wenn die Soll-Füllhöhe um ein vorgewähltes Maß sowohl über- als auch unterschritten wird. In einem solchen Fall sind ausreichend gefüllte Behälter 2 z.B. solche, die zu Parametern von Kurvenabschnitten führen, die zwischen zwei Kurvenabschnitten nach in Fig. 3 liegen, die dicht oberhalb bzw. unterhalb des Kurvenabschnitts 18 liegen.

Bei der Auswertung von Behältern 2 aus Aluminium ergeben sich Kurvenabschnitte, die den Kurvenabschnitten 16 bis 20 ähnlich sind, wobei jedoch die Abschnitte 18 bis 20 in Fig. 3 oberhalb der Null-Linie 16 liegen. Außerdem kann die Ausprägung bzw. Kontur der verschiedenen Kurvenabschnitte natürlich davon abhängen, wie groß die verwendeten Behälter 2 sind und mit welchem Füllgut sie gefüllt werden.

Nach erfolgter Bewertung der Auslenkung der Behälterwand wird das von der zentralen Steuereinheit 6 bei über- oder unterfülltem Behälter 2 abgegebene Fehlersignal zweckmäßig einem Ejektor 27 (Fig. 1) zugeführt, der den mangelhaften Behälter 2 von der Fördereinrichtung 1 entfernt. Derartige Ejektoren 27 und deren Steuerungen sind ebenfalls allgemein bekannt und bedürfen keiner weiteren Erläuterung.

Die erfindungsgemäße Vorrichtung ist in der Praxis zur Kontrolle von bis zu 120.000 Behältern pro Stunde bestimmt. Trotz sauberer Führung der Behälter bei derart hohen Geschwindigkeiten (2 m/s) ist nicht immer gewährleistet, daß der Abstand zwischen den Behältern 2 und dem Mittel 8 zur Auslenkung der Behälterwand konstant ist. Ein gleichmäßiger Abstand kann dann von Bedeutung sein, wenn das Mittel 8 zur Auslenkung ein Elektromagnet ist, weil die magnetische Kraft vom Abstand der Behälterwand zum Magneten beeinflußt wird. Bei unterschiedlichen Abständen würde sich dann die Größe der Auslenkung und damit die Amplitude oder ein anderer Parameter des Meßsignals ändern.

Meßungenauigkeiten, die auf unterschiedliche Abstände zwischen den Behältern 2 und dem Mittel 8 zur Auslenkung zurückzuführen sind, werden bei der erfindungsgemäßen Vorrichtung vorzugsweise durch einen Abstandssensor 28, z.B. einen induktiven Näherungsschalter mit einem Analogausgang kompensiert, indem das an diesem Ausgang erscheinende Abstandssignal in der zentralen Steuereinheit 6 entsprechend ausgewertet und bearbeitet wird. Auf diese Weise kann vor Beginn oder während der Füllhöhenmessung der Abstand zwischen den Behältern 2 und dem Meßsystem bestimmt und bei der Auswertung berücksichtigt werden. Nur beispielsweise sei erwähnt, daß die Abstandsinformation z.B. dazu verwendet werden könnte, die Spannung des Elektromagneten (Mittel 8) zu beeinflussen und dadurch beispielsweise dessen Anziehungskraft dem jeweiligen Abstand anzupassen.

Alternativ besteht die Möglichkeit, mit dieser Abstandsinformation zu erwartende Amplitudenhöhen, Extremwerte, Wendepunkte oder Nulldurchgänge so zu kompensieren, daß sie vom Abstand unabhängig sind. Dazu müßten beispielsweise bei unterschiedlichen Abständen ermittelte Signale des Sensors 9, z.B. des Mikrofons, tabellarisch als Soll-Werte gespeichert werden. Das bei jedem zu überprüfenden Behälter 2 vom Abstandssensor 28 gelieferte Abstandssignal informiert die zentrale Steuereinheit 6 dann über den zugehörigen Speicherplatz, in dem entsprechende Signale gespeichert sind, und diese werden dann mit den Ist-Werten der gemessenen Parameter verglichen.

Die Erfindung ist nicht auf das beschriebene Ausführungsbeispiel beschränkt, das auf vielfache Weise abgewandelt werden kann. Dies gilt insbesondere für die im Einzelfall als zweckmäßig angesehenen, aus den Kurvenabschnitten 16 bis 20 abzuleitenden Parametern und die zur Realisierung des Mittels 8 und des Sensors 9 eingesetzten Geräte. Außerdem ist klar, daß eine Beurteilung des Füllstands auch durch bloße Betrachtung der mit einem Oszillographen, einem Schreiber oder einer sonstigen Einrichtung aufgenommenen Kurvenabschnitte 16 bis 20 möglich ist. Weiter wäre es möglich, den Sensor 9 anstatt dort, wo sich das Mittel 8 befindet, an einer anderen Stelle, insbesondere einer diametral gegenüberliegenden Stelle des Behälters 2 anzuordnen. Außerdem bildet das oben erläuterte Verfahren zur Kontrolle bzw. Messung des Füllstands einen wesentlichen Bestandteil der Erfindung, wobei dieses Verfahren sowohl auf offene als auch auf geschlossene Behälter angewendet werden könnte. Schließlich versteht sich, daß die einzelnen Merkmale der Erfindung auch in anderen als den dargestellten und beschriebenen Kombinationen verwendet werden können.

## Patentansprüche

1. Vorrichtung zur Kontrolle des Füllstands in einem Behälter (2) mit einem Mittel (8) zur berührungslosen Anregung einer Wand des Behälters (2) zu einer gedämpften, mechanischen Schwingung und wenigstens einem Sensor (9) zur berührungslosen Ermittlung wenigstens eines Parameters der Schwingung zwecks Beurteilung des Füllstands, dadurch gekennzeichnet, daß der Füllstand anhand wenigstens eines Parameters beurteilt wird, der aus den ersten Schwingungsperioden ab Beginn der Schwingung abgeleitet ist.

2. Vorrichtung nach Anspruch 1, dadurch gekennzeichnet, daß als Parameter die Amplitude der Schwingung verwendet wird.

3. Vorrichtung nach Anspruch 1 oder 2, dadurch gekennzeichnet, daß als Parameter ausgewählte Werte der Schwingung, insbesondere Extremwerte, Wendepunkte und/oder Nulldurchgänge verwendet werden.

4. Vorrichtung nach einem der Ansprüche 1 bis 3, dadurch gekennzeichnet, daß die Parameter aus der ersten Schwingungsperiode ab Beginn der Schwingung abgeleitet werden.

5. Vorrichtung nach einem der Ansprüche 1 bis 4, dadurch gekennzeichnet, daß die Parameter an einem vom Behälter (2) beabstandeten Meßort ermittelt und aus unterschiedlichen Abständen der Behälter (2) zum Meßort resultierende Ungenauigkeiten durch Messung und Berücksichtigung dieser Abstände kompensiert werden.

6. Vorrichtung nach einem der Ansprüche 1 bis 5, dadurch gekennzeichnet, daß das Mittel (8) einen Elektromagneten enthält.

7. Vorrichtung nach Anspruch 6, dadurch gekennzeichnet, daß der Elektromagnet so ausgebildet ist, daß sein die Schwingung anregendes Magnetfeld im wesentlichen senkrecht auf eine Seitenwand des Behälters (2) trifft.

8. Vorrichtung nach einem der Ansprüche 1 bis 7, dadurch gekennzeichnet, daß das Mittel (8) so angeordnet ist, daß die Auslenkung der Wand in einem Bereich erfolgt, der im wesentlichen in Höhe eines erwarteten Füllstands liegt.

9. Vorrichtung nach einem der Ansprüche 1 bis 8, dadurch gekennzeichnet, daß der Sensor (9) ein Mikrofon enthält.

10. Vorrichtung nach Anspruch 9, dadurch gekennzeichnet, daß das Mikrofon in Höhe eines erwarteten Füllstands angeordnet und auf eine Seitenwand des Behälters (2) gerichtet ist.

11. Vorrichtung nach einem der Ansprüche 6 bis 10, dadurch gekennzeichnet, daß sie einen Abstandssensor (28) aufweist.

12. Vorrichtung nach einem der Ansprüche 1 bis 11, dadurch gekennzeichnet, daß sie als Teil einer Fördereinrichtung (1) einer Anlage zum Füllen der Behälter (2) ausgebildet ist.

13. Vorrichtung nach einem der Ansprüche 1 bis 12, dadurch gekennzeichnet, daß die Behälter (2) Metalldosen sind.
